# EUROPEAN PATENT SPECIFICATION

(11) **EP 1 924 796 B1**
(45) Date of publication and mention of the grant of the patent: **06.05.2009**
(21) Application number: 06796281.1
(22) Date of filing: 07.09.2006
(51) Int. Cl.: F16K 31/02

(54) **IMPROVED VALVE FOR A CONTAINER, PREFERABLY A CYLINDER CONTANING HIGH PRESSURE GAS**
AUS GOMPHOSTEMA NIVEUM ISOLIERTE VERBINDUNG GEGEN MALARIA
VALVE AMELIOREE POUR RECIPIENT, DE PREFERENCE UN CYLINDRE CONTENANT UN GAZ HAUTE PRESSION

(30) Priority: 12.09.2005 IT RM20050465
(43) Date of publication of application: 28.05.2008
(73) Proprietor: Aero Sekur S.p.A., 94011 Aprilia (LT) (IT)
(72) Inventor: GIOVANGROSSI, Giacomo, 94011 Aprilia (LT) (IT); ANDREOZZI, Daniele, 94011 Aprilia (LT) (IT)
(74) Representative: Iannone, Carlo Luigi
(86) International application number: PCT/IT2006/000649
(87) International publication number: WO 2007/032041

(56) References cited:
- WO-A-02/50460
- FR-A1- 2 652 126
- US-A- 5 211 371

## Description

The present invention relates to an improved valve for a container preferably a cylinder containing high pressure gas.

A valve attachable to a container has been described in document WO 02/50460.

More specifically, the invention concerns a valve that can be used for inflation systems, particularly studied and realised for obtaining a high speed operation, thus permitting a fast inflation of pneumatic structures.

As it is well known, various devices or systems exist to guarantee quick opening of pneumatic structures, using high pressure cylinders.

Devices are required in the earth, aeronautic and aerospace fields able ensuring very short times for opening cylinders containing high pressure gas such as nitrogen (N), helium (He), carbon dioxide (CO₂), ecc.

A typical example of use of the above inflation systems is the emergency apparatuses for helicopters.

It is known that helicopters are provided with emergency floatings. In case a helicopter is obliged to an emergency alighting on the water, it is necessary provided valves permitting a quick inflation of said floatings.

Said inflation systems are often used in the aerospace field, particularly for pneumatic structures, e.g. when returning in the atmosphere, for support structures, airbags, ecc.

Among the various kinds of said valves, it is possible mentioning those providing electromechanical actuators. They are usually comprised of a solenoid on which current is made passing for activation of the device. Current passing through said solenoid permits displacement by Lorenz force of a mechanical element opening the high pressure cylinder valve.

Systems using said kind of valves has the drawback that they do not reach high application speed. Further, said devices require high currents for their activation, this implying a high power absorption. Therefore, said devices require power accumulators, thus raising costs of the final system and weight to be installed on the helicopter.

Finally, solenoid devices are not too much reliable.

Another kind of valves provides the use of pyrotechnic devices. They are comprised of a detonation device, ensuring noticeable reaction times.

However, notwithstanding their efficiency, said systems has the following drawbacks:
- they are not much reliable, and also in view of this reason, they are presently not used in the aerospace field, requiring valves ensuring a 100% activation probability;
- they have a short life;
- once used said valves must be replaced, this not being required by the other valves, e.g. those with electromechanical activation. This implies a cumbersome maintenance of the inflation system.

Thus, it is well evident that these last systems are very expensive.

Object of the present invention is therefore that of suggesting a valve permitting a high reliability.

Another object of the present invention is that said valve can be rechargeable, thus permitting its multiple use.

It is therefore specific object of the present invention an improved valve attachable to a container, comprising the features of claim 1.

The present invention will be now described, for illustrative but not limitative purposes, according to its preferred embodiments, with particular reference to the figures of the enclosed drawings, wherein:
figure 1 shows a perspective view of the improved valve according to the present invention, installed on a high pressure cylinder;
figure 2 shows a perspective of the improved valve according to the present invention;
figure 3 shows a perspective view of the head of the valve according to the present invention;
figure 4 shows a section scheme of an activation device of valve according to the present invention in a closure position; and
figure 5 shows a section scheme of the activation device of figure 4 in an open position.

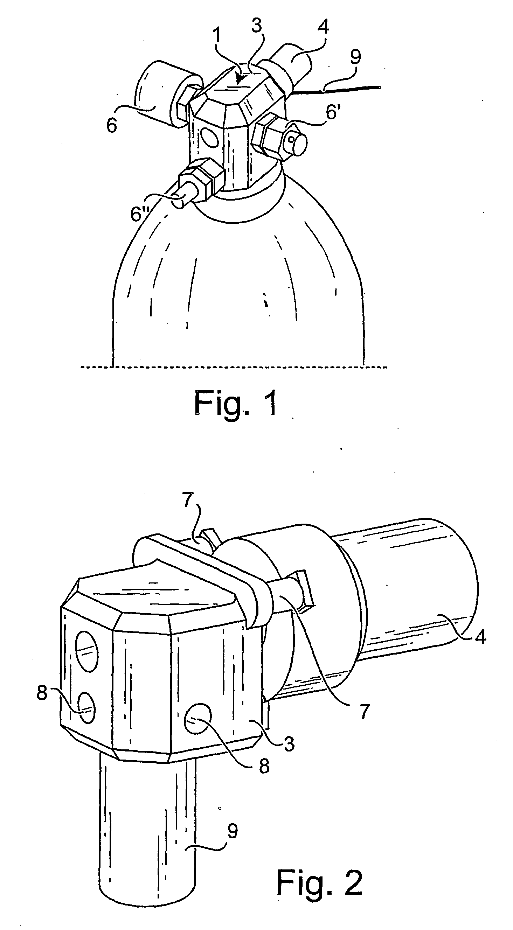

Making reference to figure 1, it is possible observing application a valve 1 on a high pressure cylinder 2.

Said valve 1 mainly comprises a head 3, and a shape memory activation device 4. Control of said valve 1 occurs electrically. Particularly, making current passing along activation wires 5. activation device is activated, opening valve 1. in this way, high pressure gas contained within the cylinder 2 can freely exit, inflating connected pneumatic structures.

From figure 1 it is noted that standard auxiliary devices can be connected with head 3. Particularly, in the present case, a manometer 6 and overpressure safety valve 6' and a service valve 6" are connected.

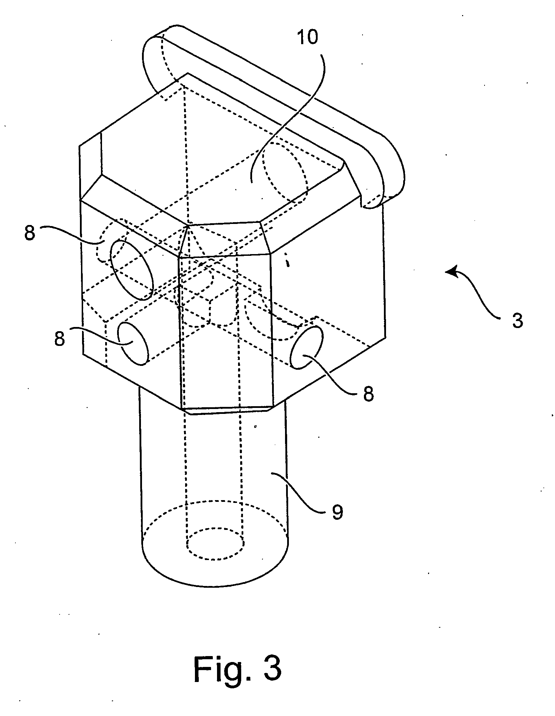

Figures 2 and 3 show more specifically connection between head 3 and activation device 4.

Three spacers 7 are provided between said head 3 and said activation device 4. said head 3 also comprises threaded holes 8, suitable for fixing said auxiliary devices 6, 6', 6".

Base 9 of head 3 is fixed on cylinder 2 and provides inside a vertical channel 9' for passage of gas, communicating with a further substantially horizontal through channel, always in the head 3, in correspondence of the activation device 4 application.

Said channel 10 is suitable to permit passage of shutter (see the following figures) opening valve 1.

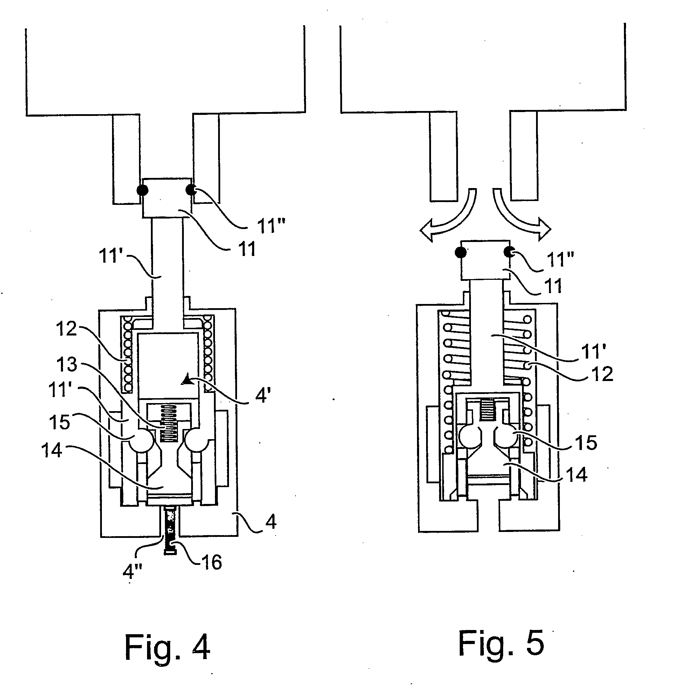

Making now reference to figures 4 and 5, it is possible examining how valve 1 according to the invention opens.

A cavity 4' inside the activation device 4 is shown in figure 4, wherein a plurality of components is inserted, said components comprising:
- a shutter 11, with a stem 11', within said channel 10. Said shutter 11 is connected with the stem and is provided of sealing gaskets 11" permitting maintaining closed orifice communicating with cylinder 2;
- a first activation spring 12, placed between said cavity 4' and convex surface of a "U" inverted structure fixed at the rear end of said pin 11';
- a second restore spring, connected with a lock bolt 14, said lock bolt 14 providing spheres 15. Said lock bolt 14 and said restore spring 13 are placed within said cavity 4';
- a third activation spring 16, housed within channel 4", connected with said lock bolt 14.

Spring 16 is comprised of a shape memory alloy, that, when at a transition temperature, is able passing from a martensitic state to an austenitic state. Particularly, in the present embodiment, said spring 16 is comprised of Ni-Ti alloy and transition temperature is of about 100°C.

A heating resistance (not shown in the figures) is provided close to said activation spring 16, supplied by said wires 5. Said resistance heats activation spring 16. When activation spring 16 reaches transition temperature by said resistance, it passes from martensitic state to austenitic state, lengthening within a very reduced time, thus generating a very intense pulse. Activation spring 16 moves spheres 15, leaving lock bolt 14 free. Now, preloaded spring 12, lengthening, displaces shutter 11 releasing gas contained within cylinder 2, thus opening valve 1.

Said valve 1 can be reloaded for a new activation, by the following steps:
- lowering activation spring 16 temperature, thus permitting transition of shape memory alloy from austenitic state to martensitic state;
- pushing lock bolt 14 backward;
- loading activation springs 12 thanks to the restore spring 13;
- permitting spheres 15 positioning again for blocking lock bolt 14.

Valve 1 can operate between -60°C and +70°C. Furthermore, as already said, said valve 1 can be reloaded and reused. Present embodiment ensures at least 100 restoring of the system.

Activation absorption is between 0.75 and 2.5 Ampere, permitting activating shutter 11 within few milliseconds.

On the basis of the previous specification, it can be observed that basic feature of the present invention is that valve according to the invention permits very quick opening times, permitting designing high speed inflations systems and, at the same time, maintaining a high reliability.

An advantage of the present invention is that of permitting the plural use of the device, thus allowing an economic saving.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Improved valve (1) attachable to a container (2), preferably a cylinder containing high pressure gas, comprising
a body, provided on a orifice of said container (2), said body (3, 4) providing a cavity wherein activation means (12, 14) are provided for driving a shutter (11) suitable to close said container orifice;
actuating means (16) made up of shape memory alloy said valve (1) being **characterised in that** it further comprises
means for modifying temperature of said actuating means (16) made up of shape memory alloy, so as to change state of said alloy from martensitic state into austenitic state, said actuating means (16) made up of shape memory alloy thus varying their shape causing translation of said shutter (11) and thus opening of said valve by said activation means (12, 14), and vice versa, to restore after the operation said valve (1);
and **in that** said activation means comprise a lock bolt (14), which has one or more cavities, one or more spheres (15), placed in said one or more cavities of said lock bolt (14) to keep the same constrained when said activation means do not open said valve (1), and a preloaded retaining means (12), suitable to cause the movement of said lock bolt (14) when said lock bolt (14) is free.

2. Valve (1) according to claim 1, **characterised in that** said shape memory alloy is a Ni-Ti alloy.

3. Valve (1) according to one of the preceding claims, **characterised in that** said activation means comprise a spring (12), said spring being:
compressed when the valve (1) is closed and the shape (16) memory alloy is in the martensitic state;
extended when the valve (1) is opened and the shape (16) memory alloy is in the austenitic state.

4. Valve (1) according to one of the preceding claims, **characterised in that** said shutter (11) comprises a stem (11').

5. Valve (1) according to one of the preceding claims, **characterised in that** said shutter (11) comprises sealing gaskets (11 ").

6. Valve (1) according to one of the preceding claims, **characterised in that** said preloaded retaining means comprises a spring.

7. Valve according to one of the preceding claims, **characterised in that** comprises retaining means, such as a spring (13), between said lock bolt and said body (4) suitable to permit restoring closure position of said valve (1).

8. Valve (1) according to one of the preceding claims, **characterised in that** said body is comprised of a head, placed on the orifice of said container and comprising a substantially horizontal channel communicating with said orifice of said cylinder, and of an activation device, fixed to said head by interposition of spacers, said activation device comprising said shutter (11) in a substantially horizontal position in correspondence of said head channel, so that, when said valve is closed, said shutter being inserted in said channel.

9. Valve (1) according to one of the preceding claims, **characterised in that** said body comprises one or more threaded holes (8) for connection of auxiliary devices (6, 6', 6").

10. Valve according to claim 9, **characterised in that** said auxiliary devices comprise a manometer (6) and/or a safety valve (6').

11. Valve (1) according to one of the preceding claims, **characterised in that** said means for varying the temperature comprise an electric resistance.

12. Valve (1) according to claim 11, **characterised in that** said means for varying the temperature comprise means for supplying said electric resistance.

## Patentansprüche

1. Verbessertes Ventil (1), das an einem Behälter (2) anbringbar ist, vorzugsweise an einem Gas unter hohem Druck enthaltenden Zylinder, mit
einem an einer Öffnung des Behälter (2) vorgesehenen Körper (3,4) mit einem Hohlraum, in welchem eine Aktivierungseinrichtung (12,14) für den Antrieb eines zum Schießen der Behälteröffnung geeigneten Verschlusselements (11) vorgesehen ist;
einer aus einer Formmemorylegierung hergestellten Betätigungseinrichtung (16);
wobei das Ventil (1) **dadurch gekennzeichnet ist, dass** es ferner aufweist
eine Einrichtung zum Modifizieren der Temperatur der aus der Formmemorylegierung hergestellten Betätigungseinrichtung (16), um dadurch den Zustand der Legierung von martensitisch in austenitisch zu ändern, so dass die aus der Formmemorylegierung hergestellte Betätigungseinrichtung (16) ihre Form ändert, wodurch eine Verschiebung des Verschlusselements (11) bewirkt wird und dadurch das Ventil durch die Aktivierungseinrichtung (12,14) geöffnet wird und umgekehrt das Ventil (1) nach der Betätigung wieder zurückgestellt wird;
und dass die Aktivierungseinrichtung einen Verriegelungsbolzen (14) aufweist, der eine oder mehrere Ausnehmungen hat, ferner eine oder mehrere Kugelelemente (15), die in der oder den Ausnehmungen des Verriegelungsbolzens (14) platziert werden, um ihn eingezwängt zu halten, wenn die Aktivierungseinrichtung das Ventil (1) nacht öffnet, und eine vorbelastete Halteeinrichtung (12), die in der Lage ist, die Bewegung
des verriegelungsbolzens (14) zu bewirken, wenn der verriegelungsbolzen (14) frei ist.

2. Ventil (1) nach Anspruch 1, **dadurch gekennzeichnet, dass** die Formmemorylegierung eine Ni-Ti-Legierung ist.

3. Ventil (1) nach einem der vorhergehenden Anspruche,
**dadurch gekennzeichnet, dass** die Aktivierungseinrichtung eine Feder (12) aufweist, die:
komprimiert wird, wenn das Ventil (1) geschlossen wird und sich die Formmemorylegierung (16) in dem martensitischen Zustand befindet;
gestreckt wird, wenn das Ventil (1) geöffnet wird und sich die Formmemorylegierung (16) in dem austenitischen Zustand befindet.

4. Ventil (1) nach einem der vorhergehenden Ansprüche,
**dadurch gekennzeichnet, dass** das Verschlusselement (11) einen Schaft (11') aufweist.

5. Ventil (1) nach einem der vorhergehenden Ansprüche,
**dadurch gekennzeichnet, dass** das Verschlusselement (11) Dichtungen (11") aufweist.

6. Ventil (1) nach einem der vorhergehenden Ansprüche,
**dadurch gekennzeichnet, dass** die vorbelastete Haltereinrichtung eine Feder aufweist.

7. Ventil nach einem der vorhergehenden Ansprüche, **dadurch gekennzeichnet, dass** eine Halteeinrichtung wie beispielsweise eine Feder (13) zwischen dem Verriegelungsbolzen und dem Körper (4) vorgesehen ist, die in der Lage ist, die Wiederherstellung der Schließposition des Ventils (1) zu ermöglichen.

8. Ventil (1) nach einem der vorhergehenden Anspräche, **dadurch** gekenntzeichnet, dass der Körper durch einen Kopf, der auf die öffnung des Behälters gesetzt ist und einen mit der Öffnung des Zylinders in Verbindung stehenden, im Wesentlichen horizontalen Kanal aufweist, und durch eine Aktiverungsvorrichtung gebildet ist, die unter Zwischenfügung von Abstandhaltern an dem Kopf befestigt ist, wobei diese Aktivierungsvorrichtung das verschlusselement (11) in einer im Wesentlichen horizontalen Position entsprechend dem Kanal des Kopfes aufweist, so dass bei geschlossenem Ventil das Verschlusselement in den Kanal eingesetzt ist.

9. Ventil (1) nach einem der vorhergehenden Ansprüche,
**dadurch gekennzeichnet, dass** der Körper eine oder mehrere Gewindebohrungen (8) für den Anschluss von Hilfsvorrichtungen (6,6',6'') aufweist.

10. Ventil nach Anspruch 9, **dadurch gekennzeichnet, dass** die Hilfsvorrichtungen ein Nanometer (6) und/oder ein Sicherheitsventil (6') umfassen.

11. Ventil (1) nach einem der vorhergehenden Ansprüche, **dadurch gekennzeichnet, dass** die Einrichtung zum Ändern der Temperatur einen elektrischen Widerstand aufweist.

12. Ventil (1) nach Anspruch 11, **dadurch gekennzeichnet, dass** die Einrichtung zum Ändern der Temperatur eine Einrichtung zum Bereitstellen des elektrischen Widerstands aufweist.

## Revendications

1. Valve améliorée (1) fixable sur un récipient (2), de préférence un cylindre contenant du gaz haute pression, comprenant
un corps, prévu sur un orifice dudit récipient (2), ledit corps (3, 4) fournissant une cavité dans laquelle sont prévus des moyens d'activation (12, 14) pour entraîner un obturateur (11) apte à fermer ledit orifice du récipient ;
des moyens d'actionnement (16) constitués d'un alliage à mémoire de forme, ladite valve (1) étant **caractérisée en ce qu'**elle comprend, en outre,
des moyens pour modifier la température desdits moyens d'actionnement (16) constitués d'un alliage à mémoire de forme, de façon à opérer le passage dudit alliage de l'état martensitique à l'état austénitique, lesdits moyens d'actionnement (16) en alliage à mémoire de forme faisant ainsi varier leur forme, ce qui opère la translation dudit obturateur (11) et ainsi l'ouverture de ladite valve par ledit moyen d'activation (12, 14), et vice versa, pour revenir à l'état initial après le fonctionnement de ladite valve (1) ;
et **en ce que** lesdits moyens d'activation comprennent un pêne de verrouillage (14) comportant une ou plusieurs cavités, une ou plusieurs sphères (15), placées dans lesdites une ou plusieurs cavités dudit pêne de verrouillage (14), pour maintenir celui-ci dans une position forcée lorsque lesdits moyens d'activation n'ouvrent pas ladite valve (1), et un moyen de retenue précontraint (12), apte à provoquer le mouvement dudit pêne de verrouillage (14) lorsque ledit pêne de verrouillage (14) est libre.

2. Valve (1) selon la revendication 1, **caractérisée en ce que** ledit alliage à mémoire de forme est un alliage Ni-Ti.

3. Valve (1) selon l'une des revendications précédentes, **caractérisée en ce que** lesdits moyens d'activation comprennent un ressort (12), ledit ressort étant :
comprimé lorsque la valve (1) est fermée et que l'alliage à mémoire de forme (16) est à l'état martensitique ;
étiré lorsque la valve (1) est ouverte et que l'alliage à mémoire de forme (16) est à l'état austénitique.

4. Valve (1) selon l'une des revendications précédentes, **caractérisée en ce que** ledit obturateur (11) comprend une tige (11').

5. Valve (1) selon l'une des revendications précédentes, **caractérisée en ce que** ledit obturateur (11) comprend des joints d'étanchéité (11").

6. Valve selon l'une des revendications précédentes, **caractérisée en ce que** ledit moyen de retenue précontraint comprend un ressort.

7. Valve selon l'une des revendications précédentes, **caractérisée en ce qu'**elle comprend un moyen de retenue, tel qu'un ressort (13), entre ledit pêne de verrouillage et ledit corps (4), permettant de rétablir la position de fermeture de ladite valve (1),

8. Valve selon l'une des revendications précédentes, **caractérisée en ce que** ledit corps comprend une tête, placée sur l'orifice dudit récipient et comportant un canal sensiblement horizontal communiquant avec ledit orifice dudit cylindre, et un dispositif d'activation, fixé sur ladite tête par interposition de pièces d'écartement, ledit dispositif d'activation comprenant ledit obturateur (11) dans une position sensiblement horizontale en correspondance avec ledit canal de la tête, de façon que, lorsque ladite valve est fermée, ledit obturateur est inséré dans ledit canal.

9. Valve selon l'une des revendications précédentes, **caractérisée en ce que** ledit corps comprend un ou plusieurs orifices taraudés (8) pour raccordement de dispositifs auxiliaires (6, 6', 6").

10. Valve selon la revendication 9, **caractérisée en ce que** lesdits dispositifs auxiliaires comprennent un manomètre (6) et/ou une soupape de sûreté (6').

11. Valve (1) selon l'une des revendications précédentes, **caractérisée en ce que** lesdits moyens destinés à faire varier la température comprennent une résistance électrique.

12. Valve (1) selon la revendication 11, **caractérisée en ce que** lesdits moyens destinés à faire varier la température comprennent des moyens pour alimenter ladite résistance électrique.
